# EUROPÄISCHE PATENTANMELDUNG

(11) **EP 4 546 582 A1**
(43) Veröffentlichungstag der Anmeldung: **30.04.2025**
(21) Anmeldenummer: 23205469.2
(22) Anmeldetag: 24.10.2023
(51) Int. Cl.: H02G 3/06, H02G 3/22

(54) **KABELDURCHFÜHRUNG**

(71) Anmelder: CENA Kunststoff GmbH, 35088 Battenberg (DE)
(72) Erfinder: LIESE, Ralf, 59909 Bestwig (DE)
(74) Vertreter: Dantz, Jan Henning

(57) **Zusammenfassung**

Eine Kabeldurchführung (1) zur Durchführung eines Kabels (10) durch eine Öffnung (9) eines Wandelementes (8) umfasst ein Spannelement (2), das mit mindestens einem Verriegelungsabschnitt einen Rand der Öffnung (9) hintergreifen kann, einen Zwischenstutzen (3) mit einem Käfig (30) zur Aufnahme eines Dichtelementes (5) und einem Außengewinde (31) und eine auf das Außengewinde (31) des Zwischenstutzens (3) aufschraubbare Überwurfmutter (4, 4'), wobei der Zwischenstutzen (3) ein Innengewinde (32) aufweist, das auf ein Außengewinde (22) des Spannelementes (2) aufschraubbar ist.

## Beschreibung

Die vorliegende Erfindung betrifft eine Kabeldurchführung zur Durchführung eines Kabels durch eine Öffnung eines Wandelementes mit einem Spannelement, das mit mindestens einem Verriegelungsabschnitt einen Rand der Öffnung hintergreifen kann, einem Zwischenstutzen mit einem Käfig zur Aufnahme eines Dichtelementes und einem Außengewinde und einer auf das Außengewinde des Zwischenstutzens aufschraubbaren Überwurfmutter.

In der DE 10 2021 106 864 A1 ist eine Kabeldurchführung in Form einer Halbverschraubung offenbart, bei der ein in eine Öffnung einer Wand einfügbares Einsteckteil mit Rasthaken versehen ist, das durch ein hülsenförmiges Sicherungsteil gegen ein Lösen gesichert sind. In dem Sicherungsteil ist zudem ein aus Stegen gebildeter Käfig für ein Dichtelement ausgebildet, das über eine Überwurfmutter fixiert werden kann, die auf einen Gewindeabschnitt des Einsteckteils aufschraubbar ist. Dadurch lässt sich ein Kabel im Wesentlichen abgedichtet durch eine Gehäusewand durchführen, allerdings ist die Haltekraft gegen eine Zugbelastung des Kabels begrenzt. Zudem lässt sich das Einsteckteil nur an Wänden mit einer bestimmten Wanddicke montieren.

Um eine Kabeldurchführung an unterschiedlich dicken Wänden montieren zu können, ist es aus der DE 10 2022 104 790 A1 bekannt, ein Spannelement mit Federstegen an einer Öffnung zu montieren und zur Fixierung des Spannelementes dann einen Gewindestutzen in das Spannelement einzudrehen. An dem Gewinde des Zwischenstutzens ist zudem eine Mutter mit einem Gewinde gelagert, die flexibel an unterschiedlich dicken Wänden montiert werden kann, um die Wand klemmend zwischen der Mutter und dem Spannelement zu fixieren. Das Spannelement ist dann durch einen stutzenförmigen Abschnitt des Zwischenstutzens gesichert, an dem auch ein Käfig mit einem Dichtelement und einer Überwurfmutter vorgesehen sind. Diese Kabeldurchführung besitzt eine vergleichsweise große Erstreckung in axiale Richtung und benötigt zudem zahlreiche Bauteile für die Montage.

Es ist daher Aufgabe der vorliegenden Erfindung, eine Kabeldurchführung zur Durchführung eines Kabels zur Durchführung eines Wandelementes zu schaffen, die einen kompakten Aufbau besitzt und flexibel an unterschiedlich dicken Wänden montierbar ist.

Diese Aufgabe wird mit einer Kabeldurchführung mit den Merkmalen des Anspruches 1 gelöst.

Die erfindungsgemäße Kabeldurchführung zur Durchführung eines Kabels durch eine Öffnung eines Wandelementes umfasst ein Spannelement, das mit mindestens einem Verriegelungsabschnitt eine Wand der Öffnung hintergreifen kann, einen Zwischenstutzen mit einem Käfig zur Aufnahme eines Dichtelementes und einem Außengewinde, und einer auf da Außengewinde des Zwischenstutzens aufschraubbaren Überwurfmutter. Dabei weist der Zwischenstutzen zusätzlich ein Innengewinde auf, das auf ein Außengewinde des Spannelementes aufschraubbar ist. Der Zwischenstutzen kann somit einerseits über das Außengewinde zur Fixierung der Überwurfmutter und andererseits über das Innengewinde zum axialen Verspannen des Spannelementes genutzt werden, was einen kompakten Aufbau ermöglicht. Zudem lässt sich durch die Gewindeverbindung das Spannelement auf einfache Weise an unterschiedlich dicken Wänden montieren.

Vorzugsweise überlappen das Innengewinde und das Außengewinde des Zwischenstutzens einander in axialer Richtung, beispielsweise kann die Überlappung mindestens 50 % der axialen Erstreckung betragen. In einem Querschnittsbereich können dann beispielsweise ein Abschnitt der Überwurfmutter, der Zwischenstutzen und das Gewinde des Spannelementes angeordnet sein. Das Dichtelement weist vorzugsweise einen Kanal zur Aufnahme eines Kabels auf und erstreckt sich von dem Käfig in eine Aufnahme des Spannelementes hinein. Das Dichtelement kann somit neben der Dichtfunktion im Bereich des Käfigs, der durch die Überwurfmutter in radiale Richtung zusammengedrückt werden kann, auch eine weitere Funktion zur Sicherung des Spannelements übernehmen. Wenn das Dichtelement in das Spannelement, beispielsweise durch die Öffnung in dem Wandelement, durchgesteckt wird, kann das Dichtelement eine Abstützung des Verriegelungsabschnittes des Spannelementes bewirken, beispielsweise der biegbaren Federstege, die sich in radiale Richtung nicht nach innen bewegen können, da dort das Dichtelement angeordnet ist und diese abstützt. Das Dichtelement kann dabei exakt in der Einstecktiefe positioniert werden, beispielsweise wenn das Dichtelement einen Konus aufweist, der an einer Stützfläche des Zwischenstutzens anliegt. Alternativ kann statt dem Konus auch eine Stufe oder ein Anschlag vorgesehen sein, der die Einstecktiefe begrenzt. Über den Konus kann eine verbesserte Abdichtung zwischen Dichtelement und Zwischenstutzen erreicht werden.

Das Dichtelement ist vorzugsweise in axiale Richtung geschlitzt ausgebildet, wobei das Kabel durch den Schlitz in das Dichtelement einfügbar ist. Dadurch kann das Kabel auch nachträglich in das Dichtelement montiert oder später wieder demontiert werden. Das Dichtelement besteht vorzugsweise aus einem elastischen Material, beispielsweise Gummi oder einem geschäumten Kunststoff.

Für den kompakten Aufbau ist das Dichtelement vorzugsweise mit einer Stirnseite flächenbündig mit einem axialen Ende des Käfigs angeordnet, so dass die Überwurfmutter mit einer Schräge auf den Käfig und dann unmittelbar auf das Dichtelement wirken kann. Zudem lässt sich die Einstecktiefe des Dichtelementes dann einfach visuell kontrollieren.

Das Spannelement weist bevorzugt mehrere Verriegelungsabschnitte auf, die als biegbare Federstege ausgebildet sein können. An jedem Federsteg ist bevorzugt mindestens ein radial nach außen hervorstehender Vorsprung vorgesehen, der einen Rand der Öffnung hintergreifen kann. Der Vorsprung kann beispielsweise in Einsteckrichtung eine Anlaufschräge und eine Keilform aufweisen, so dass beim Einstecken die Federstege radial nach innen gebogen werden, um dann den Vorsprung nach dem Durchstecken durch die Öffnung hinter der Öffnung zu verrasten und zu verriegeln.

In einer weiteren Ausgestaltung ist an dem Spannelement ein Montagering angeordnet, der klemmend zwischen dem Zwischenstutzen und dem Wandelement fixierbar ist. Der Montagering kann dabei mindestens einen Vorsprung als Anschlag aufweisen, mittels dem das Spannelement drehfest fixierbar ist. Dann kann der Montagering von Hand oder mit einem Werkzeug gehalten werden, um bei einer drehfesten Anordnung des Spannelementes mit dem Montagering den Zwischenstutzen aufzuschrauben und dabei den Montagering in axiale Richtung klemmend an der Wand anzuordnen. Zwischen dem Montagering und der Wand kann dabei ein Dichtring vorgesehen sein, beispielsweise ein O-Ring. Hierfür kann der Montagering eine Aufnahme für den Dichtring aufweisen. Optional kann der Dichtring auch integral mit dem Montagering ausgebildet sein. Der Montagering kann dabei am äußeren Umfang einen Mehrkant oder eine Rändelung aufweisen, die eine Montage vereinfacht. Auch die Überwurfmutter kann am äußeren Umfang wahlweise einen Mehrkant oder eine Rändelung aufweisen.

Die Erfindung wird nachfolgend anhand mehrerer Ausführungsbeispiele mit Bezug auf die beigefügten Zeichnungen näher erläutert. Es zeigen:
- Figuren 1A und 1B: zwei Explosionsdarstellungen einer noch nicht montierten Kabeldurchführung;
- Figuren 2A und 2B: zwei Ansichten der Kabeldurchführung der Figur 1 bei der Montage;
- Figuren 3A bis 3D: mehrere Ansichten der montierten Kabeldurchführung;
- Figuren 4A und 4B: zwei Ansichten des Montageringes der Kabeldurchführung;
- Figuren 5A bis 5C: mehrere Ansichten des Dichtelementes der Kabeldurchführung der Figur 1;
- Figuren 6A und 6B: zwei Ansichten des Spannelementes der Kabeldurchführung der Figur 1;
- Figuren 7A und 7B: zwei Ansichten des Zwischenstutzens der Kabeldurchführung der Figur 1;
- Figuren 8A und 8B: zwei Explosionsdarstellungen eines modifizierten Ausführungsbeispiels einer Kabeldurchführung, und
- Figuren 9A und 9B: zwei Ansichten der Kabeldurchführung der Figur 8 in der montierten Position.

Eine Kabeldurchführung 1 dient zur Durchführung eines Kabels 10 durch ein Wandelement, beispielsweise eine Wand eines Schaltschrankes. An dem Kabel 10 ist ein WLAN-Stecker 11 endseitig angebracht, wobei an dem Kabel 10 auch andere Stecker, beispielsweise USB-Stecker, fixiert sein können.

Die Kabeldurchführung 1 umfasst ein Spannelement 2, das durch eine Öffnung eines Wandelementes teilweise durchsteckbar ist, wobei an dem Spannelement ein Verriegelungsabschnitt in Form von mehreren Federstegen 20 ausgebildet ist und jeder Federsteg 20 einen nach außen ragenden Vorsprung 21 aufweist, der einen Rand der Öffnung hintergreifen kann. An dem Spannelement 2 ist ferner an einem ringförmigen Abschnitt ein Außengewinde 22 ausgebildet.

Auf das Außengewinde 22 des Spannelementes 2 kann ein Innengewinde 32 eines Zwischenstutzens 3 aufgeschraubt werden. Der Zwischenstutzen 3 umfasst ferner einen Käfig 30, der durch mehrere in axiale Richtung sich erstreckende Stege gebildet ist. Benachbart zu dem Käfig 30 ist ein Außengewinde 31 vorgesehen, auf das ein Innengewinde 41 einer Überwurfmutter 4 aufgeschraubt werden kann. Die Überwurfmutter 4 besitzt am äußeren Umfang einen Mehrkant 40 und dient zur Fixierung eines Dichtelementes 5. Das im Wesentlichen stutzenförmige Dichtelement 5 umfasst einen zylindrischen Abschnitt 50, der innerhalb des Käfigs 30 angeordnet ist. Von dem zylindrischen Abschnitt 50 erstreckt sich ein Konus 52 ein Einsteckrichtung, an den sich ein Einsteckabschnitt 51 anschließt, der einen geringeren Durchmesser aufweist als der zylindrische Abschnitt 50. Der Einsteckabschnitt 51 ist in der montierten Position in dem Spannelement 2 angeordnet und kann die Federstege 20 an einer Innenseite abstützen, damit diese sich nicht radial nach innen verformen und die Verbindung an dem Wandelement lösen.

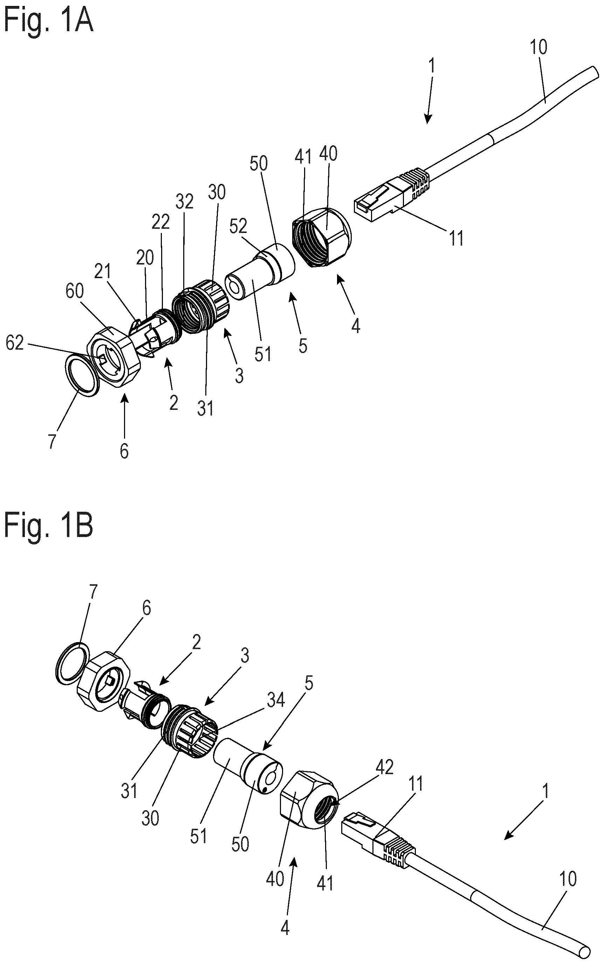

Wie in den Figuren 1A und 1B gezeigt ist, umfasst die Kabeldurchführung 1 ferner einen Montagering 6, der am äußeren Umfang einen Mehrkant 60 aufweist. In dem Montagering 6 sind innen einer oder mehrere Vorsprünge 62 vorgesehen, die zwischen zwei Federstege 20 eingreifen können und somit für eine drehfeste Fixierung des Spannelementes 2 innerhalb des Montageringes 6 sorgen. An einer axialen Seite ist ferner ein Dichtring 7 vorgesehen, der optional auch integral mit dem Montagering 6 ausgebildet sein kann.

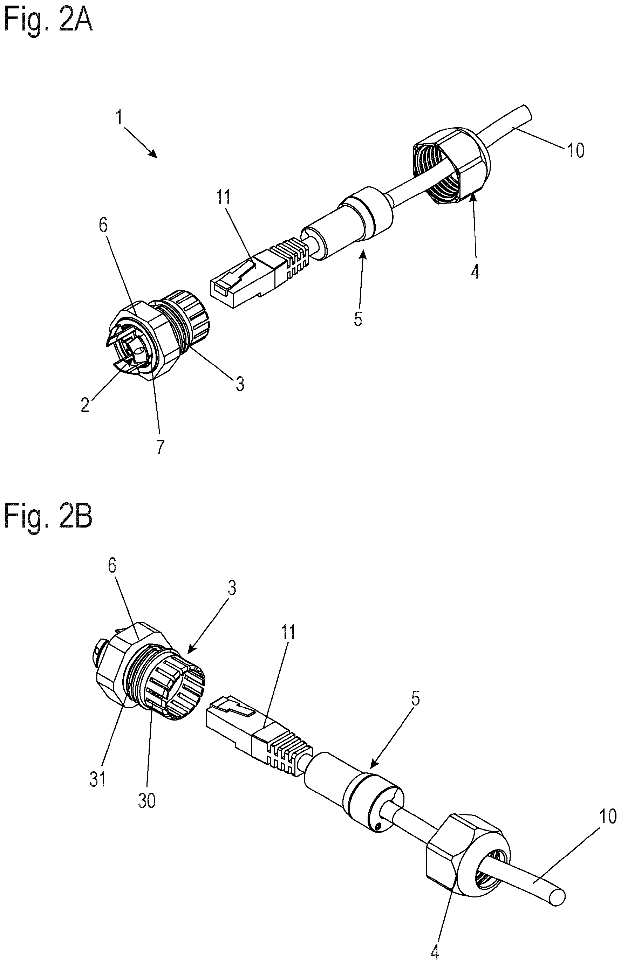

Für die Montage der Kabeldurchführung 1 wird der Montagering 6 mit dem Dichtring 7 und dem Zwischenstutzen 3 um das Spannelement angeordnet, wie dies in den Figuren 2A und 2B gezeigt ist. Der Montagering 6 ist dabei durch die radial nach außen ragenden Vorsprünge 21 verschiebbar gehalten und durch die Gewindeverbindung zwischen dem Zwischenstutzen 3 und Spannelement 2 gesichert. In dieser vormontierten Position kann der WLAN-Stecker 11 durch das Spannelement 2 durchgeführt werden.

Das Dichtelement 5 ist geschlitzt ausgebildet und ausreichend elastisch, dass es aufgebogen werden kann, um das Kabel 10 in den Kanal des Dichtelementes 5 einzufügen. Ferner ist die Überwurfmutter 4 um das Kabel 10 angeordnet worden.

Im nächsten Schritt wird nun das Dichtelement 5 mit dem Einsteckabschnitt 51 in das Spannelement 2 eingefügt, so dass der Einsteckabschnitt 51 an einer Innenseite der Federstege 20 anliegt. Dann wird das Spannelement 2 über den Montagering 6 drehfest fixiert und der Zwischenstutzen 3 von Hand oder mit einem Werkzeug eingeschraubt, bis das Wandelement klemmend zwischen den Vorsprüngen 21 und dem Montagering 6 anliegt, wobei der Zwischenstutzen 3 mit einer Stirnseite in axiale Richtung gegen den Montagering 6 drückt. Danach wird dann die Überwurfmutter 4 auf das Außengewinde 31 des Zwischenstutzens 3 aufgeschraubt, so dass das Dichtelement 5 im Bereich des Käfigs 30 über die Überwurfmutter 4 in radiale Richtung komprimiert wird und für eine dichte Verbindung zwischen Kabel 10, Dichtelement 5 und Überwurfmutter 4 sorgt.

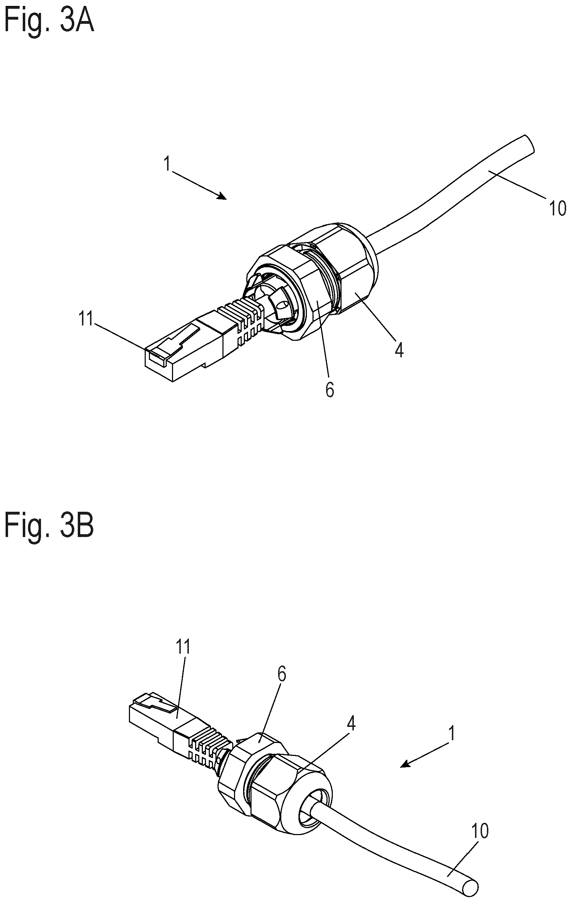

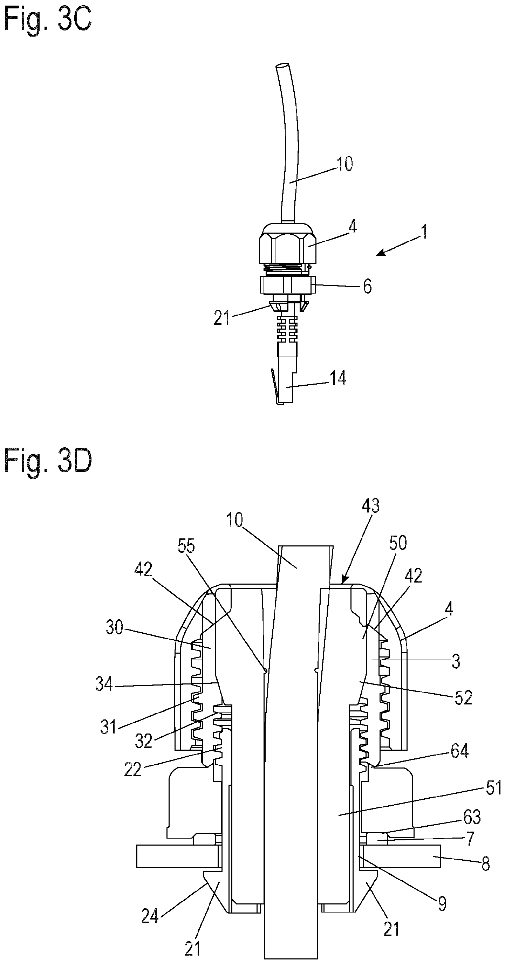

Die montierte Position der Kabeldurchführung 1 ist in den Figuren 3A bis 3D gezeigt. Es ist erkennbar, dass die Kabeldurchführung 1 in axiale Richtung einen sehr kompakten Aufbau besitzt und dennoch für eine dichte Abdichtung des Kabels 10 im Bereich eines Wandelementes 8 sorgt, das in der Schnittansicht der Figur 3D gezeigt ist. Innerhalb des Wandelementes 8 ist eine Öffnung 9 ausgebildet, die das Spannelement 2 mit Spiel aufnimmt. Das Spannelement 2 ist in der montierten Position durch die Vorsprünge 21 gehalten, die an einer Rückseite des Wandelementes 8 anliegen. Durch Aufschrauben des Zwischenstutzens 3 auf das Spannelement 2 wird der Montagering 6 in axiale Richtung zu dem Wandelement 8 verschoben, und der Dichtring 7, der in einer Aufnahme 63 des Montagerings 6 angeordnet sein kann, sorgt für eine abgedichtete Verbindung zwischen Wandelement 8 und Montagering 6. Der Montagering 6 weist in axiale Richtung auf der zu dem Zwischenstutzen 3 gewandten Seite einen ringförmigen Vorsprung 64 auf, der mit einem stirnseitigen Vorsprung an dem Zwischenstutzen 3 zusammenwirkt und dort für eine Abdichtung sorgt. Der Zwischenstutzen 3 ist im Bereich des Konus 52 abgedichtet mit dem Dichtelement 5 verbunden.

Das Dichtelement 5 kann in axiale Richtung zu dem Wandelement 8 eingesteckt werden, bis der Konus 52 an einer Stützfläche 34 des Zwischenstutzens 3 anliegt. In dieser Montageposition ist der zylindrische Abschnitt 50 mit einer Stirnseite im Wesentlichen flächenbündig zu einem stirnseitigen Ende des Käfigs 30 angeordnet. Wird nun die Überwurfmutter 4 aufgeschraubt, sorgt eine Schräge 42 an der Überwurfmutter für eine Komprimierung des Käfigs 30 und des darin angeordneten zylindrischen Abschnittes 50, der gegen das Kabel 10 gepresst wird, was für eine Abdichtung sorgt. Optional kann am inneren Umfang des Dichtelementes 5 auch ein Dichtwulst 55 oder eine andere Profilierung vorgesehen sein, um die Abdichtung zwischen Kabel 10 und Dichtelement 5 zu verbessern oder die Haltekräfte gegen ein axiales Verschieben zu erhöhen. Die Überwurfmutter 4 weist benachbart zu der Schräge 42 eine Öffnung 43 zur Durchführung des Kabels 10 auf. In Figur 3D ist die Verformung der Bauteile nicht gezeigt, so dass die einzelnen Linien der Bauteile sich überlappen.

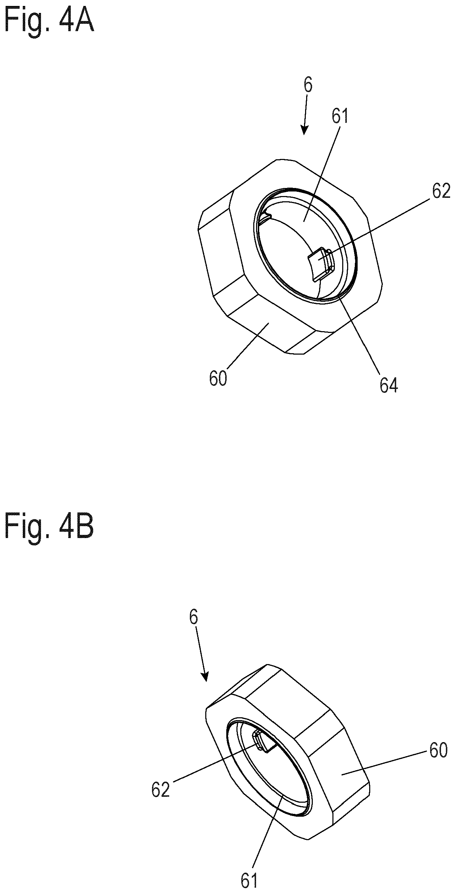

In den Figuren 4A und 4B ist der Montagering 6 im Detail gezeigt. Der Montagering weist am äußeren Umfang einen Mehrkant 60 auf, insbesondere einen Sechskant, und besitzt einen inneren zylindrischen Kanal, an dem mehrere Vorsprünge 62 radial nach innen hervorstehen. Diese Vorsprünge 62 dienen zur drehfesten Fixierung des Montageringes 6 an dem Spannelement 2. An einer axialen Stirnseite des Montageringes 6 ist der Dichtring 7 angeordnet oder angeformt.

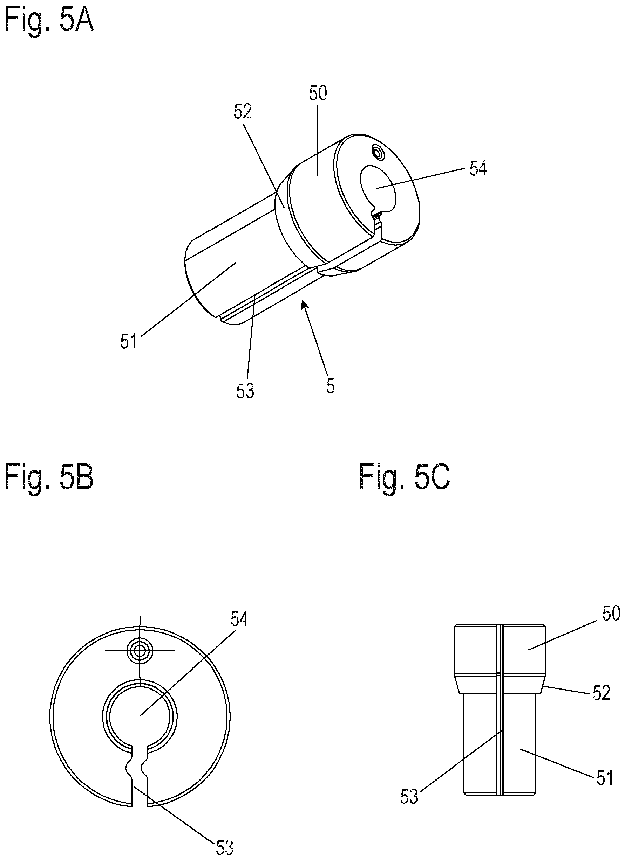

In den Figuren 5A und 5B ist das Dichtelement 5 dargestellt, das aus einem elastischen Material hergestellt ist, beispielsweise Gummi oder einem elastischen Kunststoff. Das Dichtelement 5 umfasst den zylindrischen Abschnitt 50, den zylindrischen Einsteckabschnitt 51 und den Konus 52 dazwischen. In axiale Richtung ist ein Schlitz 53 vorgesehen, so dass für die Montage des Kabels 10 das Dichtelement 5 verformt werden kann, damit das Kabel 10 in einen inneren Kanal 54 des Dichtelementes 5 eingefügt werden kann. In dem Schlitz ist eine Profilierung mit einer Nut und einer Feder zur Verbesserung der Abdichtung angeordnet.

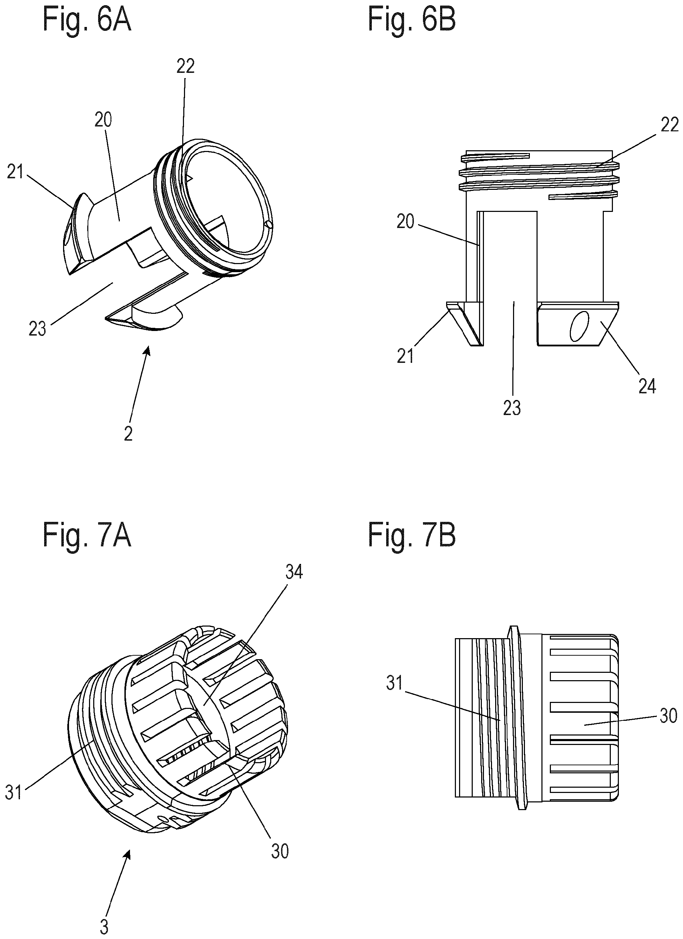

In den Figuren 6A und 6B ist das Spannelement 2 gezeigt, das an einem ringförmigen Abschnitt das Außengewinde 22 aufweist. Von dem ringförmigen Abschnitt erstrecken sich mehrere Federstege 20 in axiale Richtung, zwischen denen Spalte oder taschenförmige Öffnungen 23 ausgebildet sind. Dadurch kann jeder Federsteg 20 einzeln verformt werden, insbesondere radial nach innen gebogen werden, um an dem Wandelement 8 montiert zu werden. Jeder Federsteg 20 weist einen radial nach außen gerichteten Vorsprung 21 auf, an dem in der Einsteckrichtung eine Schräge 24 angeformt ist. In die Öffnungen 23 kann ein Vorsprung 62 des Montagerings 6 zur drehfesten Lagerung angeordnet werden.

In den Figuren 7A und 7B ist der Zwischenstutzen 3 im Detail gezeigt. Der Zwischenstutzen 3 umfasst den Käfig 30, der eine Vielzahl von Stegen umfasst, zwischen denen Schlitze oder Aussparungen vorgesehen sind, damit die Stege durch die Schräge 42 der Überwurfmutter 4 verbogen werden können. Benachbart zu dem Käfig 30 ist ein Außengewinde 31 angeformt. An der Innenseite des Zwischenstutzens 3 ist das Innengewinde 32 ausgebildet, das in axiale Richtung weitgehend mit dem Außengewinde 31 überlappend ausgebildet ist, vorzugsweise um mehr als 50 %.

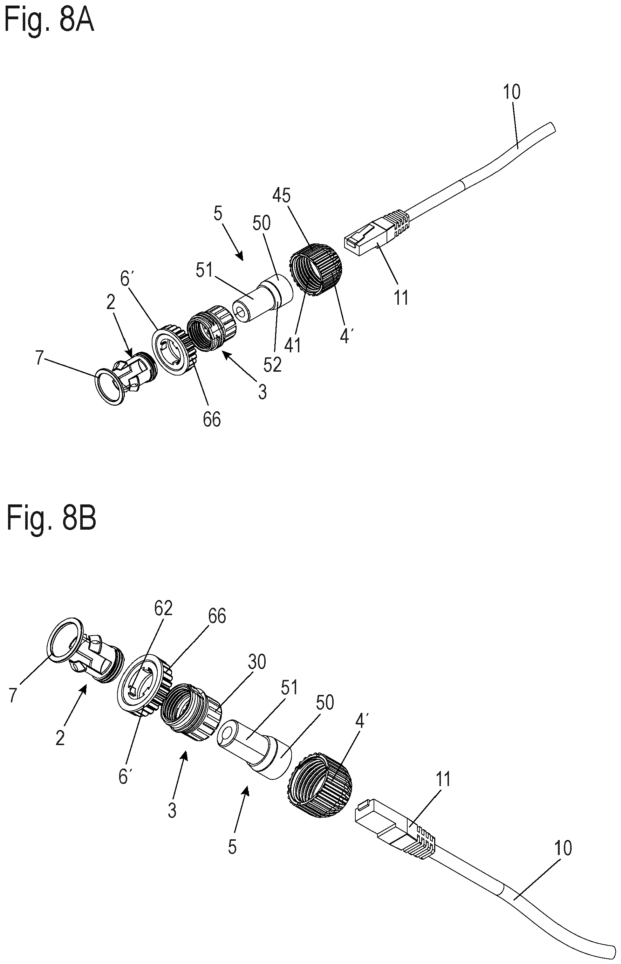

In den Figuren 8A und 8B ist ein modifiziertes Ausführungsbeispiel einer Kabeldurchführung gezeigt, bei der eine modifizierte Überwurfmutter 4' und ein modifizierter Montagering 6' vorgesehen sind. Die übrigen Bauteile entsprechen dem obigen Ausführungsbeispiel der Kabeldurchführung 1. Die Überwurfmutter 4' weist am äußeren Umfang keinen Mehrkant auf, sondern eine Rändelung, also eine Profilierung mit Rippen und Rillen, was die manuelle Montage erleichtert. Auch der Montagering 6' weist am äußeren Umfang statt dem Mehrkant eine Rändelung 66 auf, die das Greifen des Montageringes 6' bei der Montage erleichtert. Dadurch können für die Montage der Montagering 6' gehalten werden, um das Spannelement 2 drehfest zu halten und dann den Zwischenstutzen 3 aufzuschrauben. Im nächsten Schritt wird dann die Überwurfmutter 4' bevorzugt manuell aufgeschraubt.

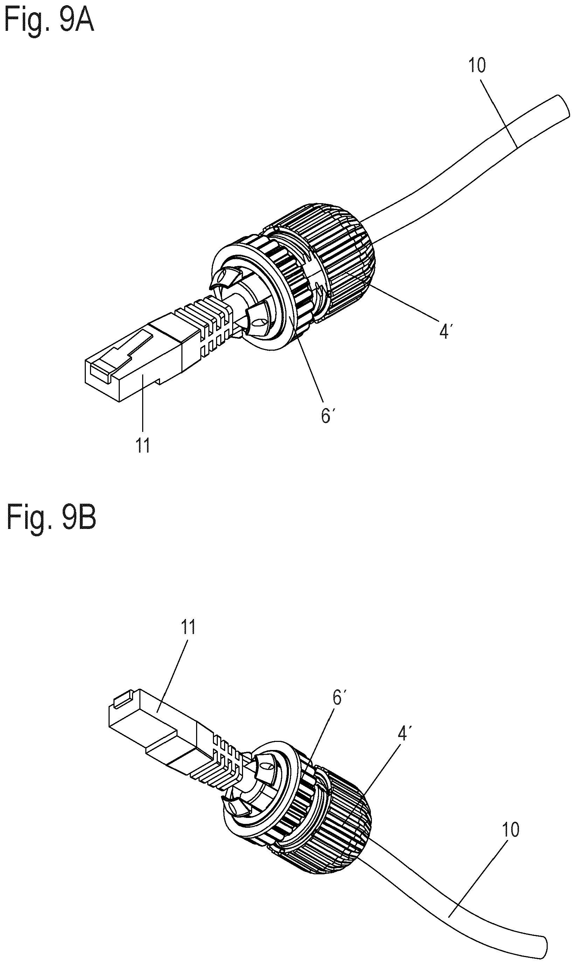

In den Figuren 9A und 9B ist die modifizierte Kabeldurchführung der Figur 8 in der montierten Position gezeigt. Die Kabeldurchführung besitzt auch hier einen sehr kompakten Aufbau in axiale Richtung.

In den dargestellten Ausführungsbeispielen sind die Überwurfmutter 4 und 4', der Zwischenstutzen 3, der Montagering 6 und 6' und das Spannelement 2 vorzugsweise aus Kunststoff und/oder Metall hergestellt.

### Bezugszeichenliste

- 1: Kabeldurchführung
- 2: Spannelement
- 3: Zwischenstutzen
- 4, 4': Überwurfmutter
- 5: Dichtelement
- 6, 6': Montagering
- 7: Dichtring
- 8: Wandelement
- 9: Öffnung
- 10: Kabel
- 11: WLAN-Stecker
- 20: Federsteg
- 21: Vorsprung
- 22: Außengewinde
- 23: /Öffnung
- 24: Schräge
- 30: Käfig
- 31: erstreckende
- 32: Innengewinde
- 34: Stützfläche
- 40: Mehrkant
- 41: Innengewinde
- 42: Schräge
- 43: Öffnung
- 50: zylindrischer Abschnitt
- 51: Einsteckabschnitt
- 52: Konus
- 53: Schlitz
- 54: Kanal
- 55: Dichtwulst
- 60: Mehrkant
- 62: Vorsprung
- 63: Aufnahme
- 64: Vorsprung
- 66: Rändelung

## Patentansprüche

1. Kabeldurchführung (1) zur Durchführung eines Kabels (10) durch eine Öffnung (9) eines Wandelementes (8), mit:
a) einem Spannelement (2), das mit mindestens einem Verriegelungsabschnitt einen Rand der Öffnung (9) hintergreifen kann;
b) einem Zwischenstutzen (3) mit einem Käfig (30) zur Aufnahme eines Dichtelementes (5) und einem Außengewinde (31);
c) einer auf das Außengewinde (31) des Zwischenstutzens (3) aufschraubbaren Überwurfmutter (4, 4'),
**dadurch gekennzeichnet, dass** der Zwischenstutzen (3) ein Innengewinde (32) aufweist, das auf ein Außengewinde (22) des Spannelementes (2) aufschraubbar ist.

2. Kabeldurchführung nach Anspruch 1, **dadurch gekennzeichnet, dass** das Innengewinde (32) und das Außengewinde (31) des Zwischenstutzens (3) einander in axiale Richtung überlappen.

3. Kabeldurchführung nach Anspruch 1 oder 2, **dadurch gekennzeichnet, dass** das Dichtelement (5) einen Kanal zur Aufnahme eines Kabels (10) aufweist und sich von dem Käfig (30) bis in eine Aufnahme des Spannelementes (2) hinein erstreckt.

4. Kabeldurchführung nach einem der vorhergehenden Ansprüche, **dadurch gekennzeichnet, dass** das Dichtelement (5) einen Konus (52) aufweist, der an einer inneren Stützfläche (34) des Zwischenstutzens (3) anliegt.

5. Kabeldurchführung nach einem der vorhergehenden Ansprüche, **dadurch gekennzeichnet, dass** das Dichtelement (5) in axiale Richtung geschlitzt ausgebildet ist und durch den Schlitz (53) das Kabel (10) in das Dichtelement (5) einfügbar ist.

6. Kabeldurchführung nach einem der vorhergehenden Ansprüche, **dadurch gekennzeichnet, dass** das Dichtelement (5) mit einer Stirnseite im Wesentlichen flächenbündig mit einem axialen Ende des Käfigs (30) angeordnet ist.

7. Kabeldurchführung nach einem der vorhergehenden Ansprüche, **dadurch gekennzeichnet, dass** das Spannelement (2) mehrere Verriegelungsabschnitte aufweist, die als biegbare Federstege (20) ausgebildet sind und mindestens einen radial nach außen hervorstehenden Vorsprung (21) aufweisen, der einen Rand der Öffnung (9) hintergreifen kann.

8. Kabeldurchführung nach einem der vorhergehenden Ansprüche, **dadurch gekennzeichnet, dass** um das Spannelement (2) ein Montagering (6, 6') angeordnet ist, der klemmend zwischen dem Zwischenstutzen (3) und dem Wandelement (8) fixierbar ist.

9. Kabeldurchführung nach Anspruch 8, **dadurch gekennzeichnet, dass** der Montagering (6, 6') mindestens einen Vorsprung (62) aufweist, mittels dem das Spannelement (2) drehfest fixierbar ist.

10. Kabeldurchführung nach Anspruch 8 oder 9, **dadurch gekennzeichnet, dass** der Montagering (6, 6') am äußeren Umfang einen Mehrkant oder eine Rändelung (66) aufweist.
